# EUROPEAN PATENT SPECIFICATION

(11) **EP 4 588 681 B1**
(45) Date of publication and mention of the grant of the patent: **02.12.2026**
(21) Application number: 24152639.1
(22) Date of filing: 18.01.2024
(51) Int. Cl.: B41J 11/46, G06K 15/02, H04N 1/407, H04N 1/54, B41J 11/00

(54) **A METHOD FOR SELECTING FIDUCIAL MARKERS FOR A PRINT MEDIA AND A PRINTER**
VERFAHREN ZUR AUSWAHL VON BEZUGSMARKERN FÜR EIN DRUCKMEDIUM UND DRUCKER
PROCÉDÉ DE SÉLECTION DE MARQUEURS DE REPÈRE POUR UN SUPPORT D'IMPRESSION ET IMPRIMANTE

(43) Date of publication of application: 23.07.2025
(73) Proprietor: Canon Production Printing Holding B.V., 5914 HH Venlo (NL)
(72) Inventor: FRIJNTS, Tim R., Venlo (NL); SEVENICH, Johannes B.M., Venlo (NL)
(74) Representative: Canon Production Printing IP Department

(56) References cited:
- CN-A- 103 171 319
- US-A1- 2011 080 571
- US-A1- 2016 255 232

## Description

### 1. Field of the invention

The present invention relates to a method for determining fiducial markers to be printed on a substrate by means of a printer which is configured to execute a print process and to transport the substrate relatively to a gantry comprising a print head and an image scanner in a main scanning direction over a print surface underneath the gantry, the print head and the image scanner moveable along the gantry in a sub-scanning direction perpendicular to the main scanning direction, the printhead configured to eject marking material on the substrate and the image scanner configured to create scanned images of the printed substrate, and the printer comprising a print controller for control of the print process and comprising a storage with print settings, the method comprising the steps of transporting the substrate over the print surface underneath the gantry, the image scanner moving along the gantry in at least one swath, the image scanner creating at least one digital image of the substrate when the image scanner is moving along the gantry in the sub-scanning direction, and the image scanner sending the at least one created digital image to the print controller.

The image scanner may also be called "scanner" hereinafter.

A fiducial marker may also be called "marker" hereinafter.

The substrate may also be called "media" or "print media" hereinafter.

### 2. Description of Background Art

In a roll to roll printer in which a paper step during printing is corrected using printed fiducial markers next to the image, a scanner device attached at the printhead carriage may be used to detect the printed markers. The fiducial markers are objects placed in the field of view of an image scanner which appear in the image produced, for use as a point of reference or a measure. The markers have different colours and shapes depending on the media characteristics. Somewhat textured media should use enhanced markers, while heavily textured and patterned media need to use robust markers. Media which are not white and opaque (coloured, transparent, mirror like) often need to use white ink markers. Especially for coloured media it can be difficult to determine the correct marker colour without trial and error. As the scanner uses blue light, which is absorbed by the yellow media and not by the blue media, yellow media looks dark in the scan made by the scanner, requiring white markers and blue media looks light, requiring CMYK markers. CMYK stands for Cyan, Magenta, Yellow and Black, while W stands for White. But a lot depends on how yellow or blue the media are. In case of poor contrast (coloured media) it may be needed to use robust markers despite a lack of texture. For each new medium a so-called medium calibration should be done to calibrate the media step for the first meter and step size dependent error. For both the calibration and the subsequent prints with markers in the margin, an error is given if too many markers cannot be identified successfully. However, selection of a more robust marker type comes at the cost of increased marker width, i.e. less space for the customer print.

Until now the above-mentioned problem was solved by using a manual. For some media the user is guided to the correct setting. But for some media it still fails. A specific gloss, colour, surface structure, metal, transparency, etc, cannot be described in all detail. Probably measuring devices would be needed to do this correctly. So in practice good settings are found by experience or by iteration.

Prior Art document US 2016/255232 A1 discloses the preamble of claim 1.

### SUMMARY OF THE INVENTION

It is an object of the invention to provide a method which mitigates the here-above mentioned problem.

In accordance with the present invention, a method for printing according to claim 1 is provided.

According to an embodiment the step of selecting the at least one ink colour comprises the sub-steps of retrieving from the storage a plurality of contrast thresholds for measured contrast levels, determining a mean contrast level from the at least one determined contrast level determined, determining if the mean contrast level is low or high compared to a first contrast threshold of the plurality of contrast thresholds, in case of a high mean contrast level, selecting a colour of the marking material from a CMYK spectrum, in case of low mean contrast level
in case of a mean contrast level higher than a second contrast threshold of the plurality of contrast thresholds which is lower than the first contrast threshold, selecting both white and a colour of the marking material from the CMYK spectrum, and
in case of a mean contrast level which is lower than the second contrast threshold, selecting a colour white for the marking material.

According to the present invention the selection of a marker type (colour and shape) is done automatically as a first step of a media calibration. In the invented method the print media is scanned and by means of the scanner response it is determined how light or dark the print media is and how much structure it has. The light of an illumination which arrives for each scan line at a sensor is integrated for a certain amount of time. The scanner response may be a number of bits, where with a predetermined illumination and integration time the scanner response values may vary from a low number which may correspond to a perfectly dark image to a high number which may correspond to a perfectly white image. After a subsequent brightness calibration of the scanner - with or without light on a white medium - the scanner response values are set to a value between 0 and 255 on an 8 bit scale, i.e. the scanned image is converted to an 8 bit value which defines the final scanner response.

In many cases the selection of colours and shapes of the fiducial markers is enough to determine a preferred marker type or at least to narrow down the options.

A high contrast may be determined in case of a light, coloured or white substrate. A low contrast may be determined in case of a dark, coloured, transparent and/or mirror-like substrate. In case of high contrast CMYK marker should be used, for middle contrast both white and CMYK markers may be tried out in a following step. In case of a low contrast white markers should be used.

The contrast determination may be done anytime a media is used for the first time to check if user choices make sense. If the user choices do not make sense when compared to the contrast determination results, the user is advised to not start printing. The is advised how the change the marker setting, to perform an additional marker selection test or the marker settings may be changed automatically without user intervention.

According to an embodiment the method comprises the step of printing different markers types and color and evaluating a visibility of the different marker types. A marker type is determined by its colour and its shape. Firstly a marker color is determined. If the determined colours fails the visibility test, the determined colours are tried out with more robust markers. For example, after determining the colour, the trying out starts with the smallest marker until a marker with sufficiently high success rate is determined (e.g. >95%). The choice of marker width must be communicated back to the raster image processing (RIP) software in order to set the correct printable media width. It may be necessary for the user to enter this value into the RIP software, but preferably it is communicated automatically. For example, the marker shape and colour can be selected automatically, by adding a default "automatic" option to the marker type selection. If the automatic option is selected, a "use white markers" option is greyed out. In the very rare case no usable marker can be found additional options may be considered, e.g. a further increase of the marker width, acceptance of a higher failure rate (better lower accuracy than no measurement), etc.

According to the present invention the marker selection calibration can also be done automatically or semi-automatically in case of a print error generated by the print controller of the printer, e.g. an error like "cannot read markers for media step control", The inventors have recognized that selection of the wrong marker type is a possible reason for marker failures besides other reasons which should also be evaluated automatically where possible such as scanner contamination or too many failing nozzles. During the marker selection it may be evaluated which failing nozzles are used in the markers and a uniformity of the scanned media may be evaluated at different width positions of the media.

By applying the method according to the present invention a reduction of the number of errors during calibration and printing is realized. Also a complexity for critical media is reduced (e.g. dark coloured media, semi-transparent print media). The method gives a higher flexibility: state of art is that markers can have the colors Yellow, Black and White, but according to the present method in principle all colors CMYKW could be used. The marker width could also be increased even further if needed which may be implemented as a parameter in the calibration software of the print controller. The present method provides an automatic diagnosis for one of the most prevalent errors in the field.

According to an embodiment the step of selecting the at least one shape comprises the sub-steps of retrieving from the storage a plurality of standard deviation thresholds for standard deviation levels, determining a mean or median standard deviation from the plurality of determined standard deviations, determining if the determined mean of median standard deviation is respectively low, high or very high compared to the plurality of thresholds for standard deviations, and based on the determined mean or median standard deviation, select at least one size for the at least one shape.

According to the present invention a standard deviation of the scanner response in a patch is determined to evaluate a roughness or pattern of the print medium. However, other measures to evaluate the roughness or pattern may be envisioned.

A low standard deviation is an indication for a smooth media, where markers of a standard shape and size can be used. A high standard deviation is an indication for a rougher print medium or a print medium with a pattern, where both the standard shape and a more enhanced or robust shape can be used for trying out the best selection of the fiducial markers. The more enhanced or robust shape has a larger size than the standard shape. A very high standard deviation is an indication for a very rough print medium, i.e. an elevated print medium or a print medium with an elevated pattern. In case of a very high standard deviation, the enhanced and robust markers should be selected for further trying out the best selection of the fiducial markers.

By doing so, it is determined which fiducial marker is needed based on the media properties in order to prevent errors due to too many unreadably markers, while also the marker is kept as small as possible.

According to an embodiment the first patch comprises an edge of the substrate, and the method comprises the step of determining the at least one contrast level between the substrate and the print surface by means of the first patch. Especially when the print surface is black a substantial contrast between print media and the (black) print surface at the media edge can detected.

According to an embodiment the method comprises the step of receiving a print job to be printed on the substrate and printing the print job together with fiducial markers on the substrate, the fiducial markers having the at least one selected colour and the at least one selected shape on the substrate.

The present invention also relates to a printer configured to execute a print process and to transport a substrate relatively to a gantry comprising a print head and an image scanner in a main scanning direction over a print surface underneath the gantry, the print head and the image scanner moveable along the gantry in a sub-scanning direction perpendicular to the main scanning direction, the printhead configured to eject marking material on the substrate and the image scanner configured to create scanned images of the printed substrate, and the printer comprising a print controller for control of the print process and comprising a storage with print settings, wherein the print controller is configured to execute the steps of the method according to the present invention.

According to an embodiment the printer is a roll-fed printer or a sheet-fed flatbed printer. The present invention also relates to a software product comprising program code on a machine-readable medium, which program code, when loaded into a print controller of a digital printer, causes the print controller to execute the steps of a method according to the present invention.

Further scope of applicability of the present invention will become apparent from the detailed description given hereinafter.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic perspective view of a printing system configured to print on a roll according to the present invention;
Fig. 2 is a schematic diagram of a control unit of a printer according to Fig. 1;
Fig. 3 are samples of media to be tested according to the present invention;
Fig. 4 is a print media with examples of fiducial markers according to the present invention;
Fig. 5A - 5B is a schematic block diagram illustrating the steps of the method according to the present invention; and
Fig. 6 is a diagram of a software product according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

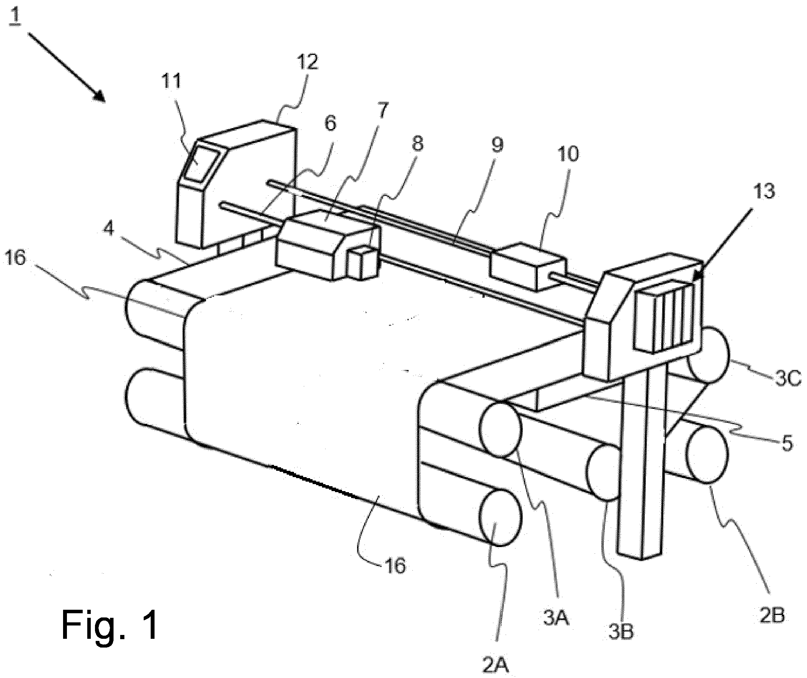

Fig. 1 shows a wide format inkjet printer 1. The wide-format printer 1 comprises an inkjet printing assembly 7 for printing on a print medium 16. The print medium 16 in Fig. 1 is a roll of media. The print medium 16 is supplied from a media input unit (not shown), which may be configured for storing a plurality of such print media 16 and supplying these to the printer 1. The printer 1 comprises transport means for receiving and transporting the print medium 16 along the inkjet printing assembly 7. In Fig. 1, the transport means comprise an endless transport belt 4 supported on a plurality of support rollers 3A, 3B, 3C. At least one of the support rollers 3A, 3B, 3C is provided with driving means for moving the belt 4. Additionally, one or more one of the support rollers 3A, 3B, 3C may be configured to be moved and/or tilted to adjust and control the lateral position of the belt 4. The printer 1 is provided with at least one image scanner 8 near the inkjet printing assembly 7, such as a CCD camera or area camera, in order to scan the printed fiducial markers which are used to determine the relative position of belt 4 and/or the print medium 16. Data from said at least image scanner 8 may be applied to control the position of the belt 4 and/or the print medium 15. The print medium 15 is transported stepwise and/or in continuous movement.

The inkjet printing assembly 7 is configured to translate along a first guide beam 6 in a scanning direction. The scanning direction is perpendicular to the direction in which the print medium is transported by the belt 4. The inkjet printing assembly 7 holds a plurality of print heads (not shown), which are configured to jet a plurality of different marking materials (different colors of ink CMYKW, primers, coatings, etc.) on the print medium 16. Each marking material for use in the printing assembly 7 is stored in one of a plurality of containers arranged in fluid connection with the respective print heads for supplying marking material to said print heads to print an image on the print medium 16.

The ejection of the marking material from the print heads is performed in accordance with data provided in the respective print job. The timing by which the droplets of marking material are released from the print heads determines their position on the print medium 16. The timing may be adjusted based on the position of the inkjet printing assembly 7 along the first guide beam 6.

The marking materials may require treatment to properly fixate them on the print medium. Thereto, a fixation unit 10 is provided downstream of the inkjet printing assembly 7. The fixation unit 10 may emit heat and/or radiation to facilitate the marking material fixation process. In the example of Fig. 1, the fixation unit 10 is a radiation emitter, which emits light of certain frequencies, which interacts with the marking materials, for example UV light in case of UV-curable inks. The fixation unit 10 in Fig. 1 is translatable along a second guide beam 9. Other fixation units 10, such as page-wide curing or drying stations may also be applied. Further, the inkjet printing assembly 7 may be provided with a further fixation unit on the same carriage which holds the print heads. This further fixation unit can be used to (partially) cure and/or harden the marking materials, independent of or interaction with the fixation unit 10.

After printing, and optionally fixation, the print medium 16 is transported to a receiving unit (not shown). The receiving unit may comprise a take-up roller for winding up the print medium 16 or a receiving tray for supporting sheets of print medium 16. Optionally, the receiving unit may comprise processing means for processing the medium 16 after printing, e.g. a post-treatment device such as a coater, a folder, a cutter, or a puncher.

The wide-format printer 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touch-screen control panel. The local user interface unit 11 is connected to a control unit 12 connected to the printer 1. The control unit 12, for example a computer, comprises a processor adapted to issue commands to the printer 1, for example for controlling the print process. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

### Control

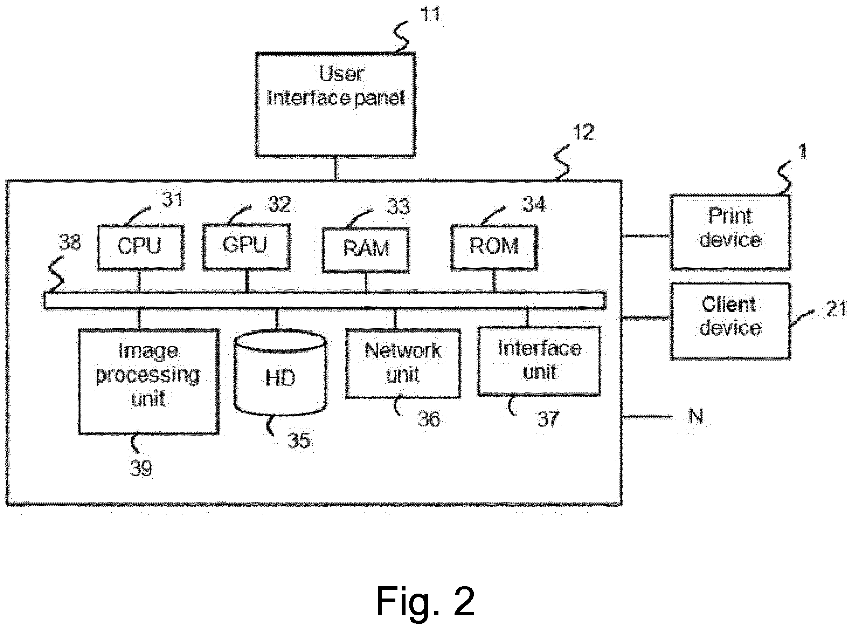

An embodiment of the control unit 12 is in more detail presented in Fig. 2. As shown in Fig. 2, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored in the ROM 34 or on the HD 35 and the local user interface panel 11. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client device 21 and to the printing system 1. The network unit 36 connects the control unit 12 to the network N and is designed to provide communication with workstations and with other devices reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts, graphics, rasterized images that describe the content of the document to be printed, described in a Page Description Language or the like), image processing attributes and print settings. The print controller may provide pre-programmed digital images of fiducial markers according to CMYKW colours in different shapes. As soon as a selection of a fiducial marker is done according to the present method, the corresponding digital image may be retrieved from storage or memory of the print controller.

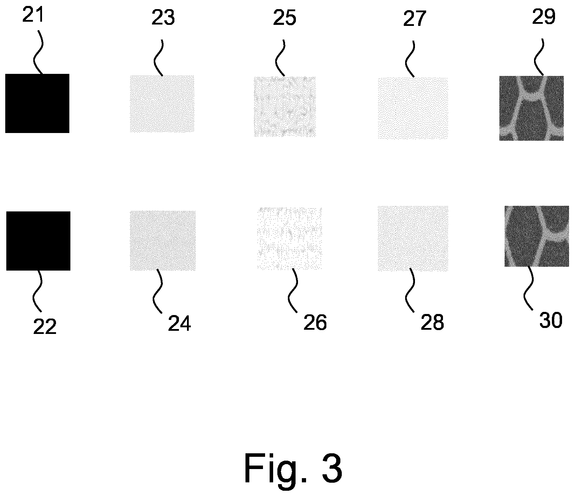

Fig. 3 are samples of print media to be tested according to the present invention. The samples are used to determine the contrast of the print media. Samples may be for example taken from SAV print media. SAV stands for Self-Adhesive Vinyl with full colour digital print which is suitable for a wide range of signage applications. Self-Adhesive Vinyl is a printed vinyl which has a sticky back coating so that it can stick to flat nonporous surfaces. Self-Adhesive Vinyls can be glossy or matt with permanent adhesive, glossy or matt with removable adhesive or gloss white highly conformable cast. The special surface coating optimizes ink adhesion and colour reproduction for long-lasting brilliant graphics. Samples may be taken from MPI2000 print media which are used for digital printing of durable graphics. MPI2000 is a versatile film which can be applied over all kinds of flat surfaces and even simple curves. Additional opacity can be opted fro by means of a high opacity face film. Samples may be taken from IJM684 print media which are suitable for indoor and outdoor textured floor graphics. IJM684 is a slip resistant, self-adhesive textured matt PVC coated fabric. IJM684 can be adhered to carpets, tiles, concrete, wooden and PVC floors, untreated stone and almost every surface indoor and outdoor. Samples may be taken from IJM613 print media which is a white, highly opaque, blue backed outdoor paper with a barrier coating, which has been specially developed for printing with solvent and UV curable inks. Samples may be taken from print media which contain a honey grate pattern.

A sample 21 is derived from a print media called Red SAV - Blue. A sample 22 is derived from a print media called Red SAV - Amber. A sample 23 is derived from a print media called MPI2000 - Blue. A sample 24 is derived from a print media called MPI2000 - Amber. A sample 25 is derived from a print media called IJM684, textured SAV - Blue. A sample 26 is derived from a print media called IJM684, textured SAV - Amber. A sample 27 is derived from a print media called IJM613 - Blue. A sample 28 is derived from a print media called IJM613 - Amber. A sample 29 is derived from a print media with a honeygrate pattern - Blue. A sample 30 is derived from a print media with a honeygrate pattern - Amber. The suffix Blue and Amber indicate the colour of the LED which is used by the image scanner 8 for illumination of the print media when taking the scans of the samples of print media. For each print medium a mean, median and standard deviation of the scanner response is calculated by the print controller 31. From all samples together a median of the means of the samples, a median of the medians of the samples and a median of the standard deviations of the samples is calculated by the print controller 31. The following results were obtained, wherein the unit of measurement mentioned in table 1 here-below is the 8-bits number of the scanner responses:

**Table 1**

| | median | | std | |
|---|---|---|---|---|
| LED | Blue | amber | blue | amber |
| 'Honeygrate pattern' | 81 | 79 | 33.9 | 35.7 |
| 'IJM613' | 244 | 243 | 2.2 | 4.0 |
| 'IJM684, textured SAV' | 238 | 244 | 9.2 | 9.1 |
| 'MP12000' | 236 | 233 | 1.5 | 3.3 |
| red SAV' | 5 | 22 | 1.2 | 3.0 |

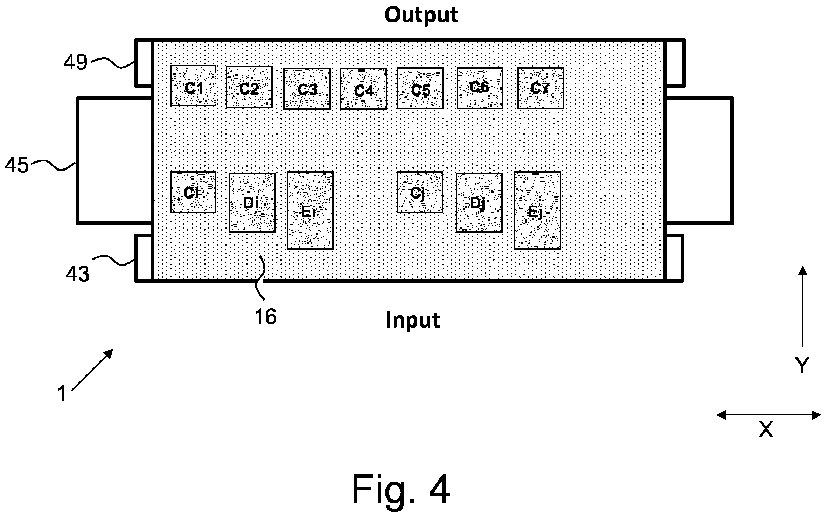

Fig. 4 is a print media with schematic examples of patches according to the present invention. A first category of patches is printed with different colours C1 - C7 after a contrast determination on samples of print media 16 by the scanner and the print controller as shown in Fig. 3. The different colours have been selected according to the method of the present invention to be the most promising colours for fiducial markers with respect to visibility on the print medium 16.

The first category of patches is scanned by the scanner when moving the scanner in the X direction and the scanned images are sent to the print controller for analysis on visibility. If according to the analysis of the scanned images one of the patches C1 - C7 is sufficient with respect to visibility, a fiducial marker with the one selected colour is used to be printed on the prints to be made by the printer on the print medium 16. The fiducial marker may be stored with its colour and shape in the media catalogue on the print controller. In another embodiment just the selected colour with the standard shape is stored in the media catalogue together with the type of print medium 16.

If none of the patches C1 - C7 is sufficient enough, one or more of the most promising colours Ci, Cj are selected for further testing. A second category of patches is printed with the colours Ci - Cj with different shapes Ci, Di, Ei, Cj, Dj, Ej.

The second category of patches is scanned by the scanner when moving the scanner in the X direction and the scanned images are sent to the print controller for analysis on visibility. If according to the analysis of the scanned images one of the patches Ci, Di, Ei, Cj, Dj, Ej is sufficient, the colour and the shape of the one patch are selected for the fiducial markers to be printed on the prints to be made by the printer on the print medium 16. The fiducial marker may be stored with its colour and shape in the media catalogue on the print controller. In another embodiment just the selected colour with the selected shape is stored in the media catalogue together with the type of print medium 16.

Each of the patches C1 - C7 in Fig. 4 contain one colour. However, patches with more than one colour may be envisioned. By combining colours into one patch, less patches need to be printed which leads to calibration time gain and less waste of print medium 16.

During the printing of the patches for the media calibration one or more paper steps in the Y direction are performed. According to an embodiment, during the paper steps, i.e. when the print medium 16 is moving in the Y direction from the input station to the output station, the print controller is configured to analyse the images of the first category and selecting the promising colours Ci, Cj for the second category of patches. After the selection of the wanted patches of the second category, the print controller sends instructions to the print head station to print the images for the second category of patches according to the colours Ci and Cj and the different shapes of small (Ci, Cj), medium (Di, Dj) and large size (Ei, Ej).

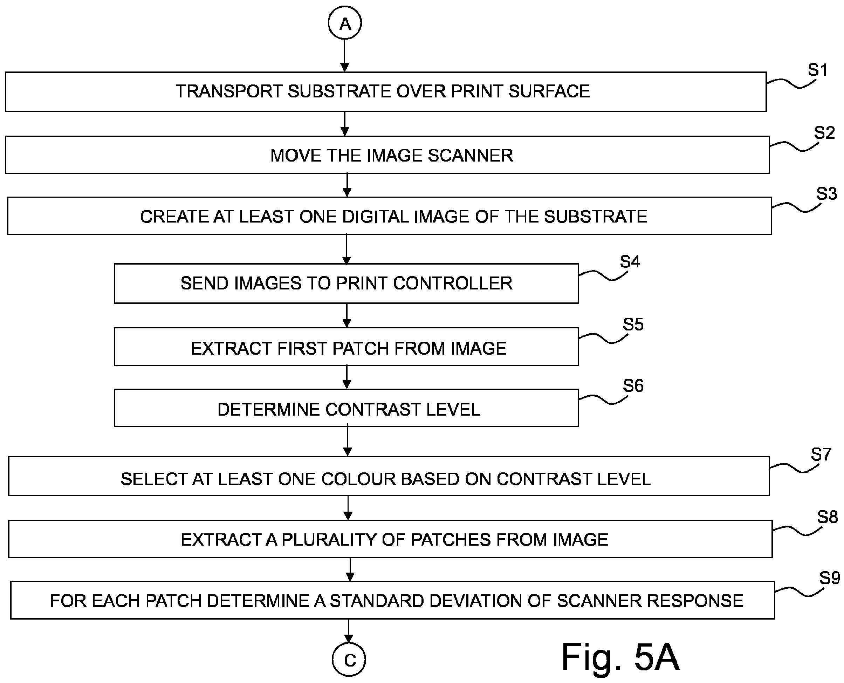

Fig. 5A - 5B discloses an example of a first method according to the invention.

The first method starts in a starting point A which leads to a first step S1.

In the first step S1 the substrate is transported over the print surface underneath the gantry.

In a second step S2 the image scanner is moving along the gantry in at least one swath.

In a third step S3 the image scanner creates at least one digital image of the substrate when the image scanner is moving along the gantry in the sub-scanning direction.

In a fourth step S4 the image scanner sends the at least one created digital image to the print controller.

In a fifth step S5 the print controller extracts a first patch from the at least one created digital image.

In a sixth step S6 the print controller determines at least one contrast level of the first patch by means of the at least one created digital image.

In a seventh step S7, based on the at least one determined contrast level, the print controller selects at least one colour of marking material for printing a fiducial marker on the substrate.

In an eighth step S8 the print controller extracts from the at least one created digital image a plurality of other patches, wherein each patch of the plurality of patches comprises a different part of the substrate.

In a ninth step S9 the print controller determines for each patch of the plurality of patches a standard deviation of the scanner response within the patch.

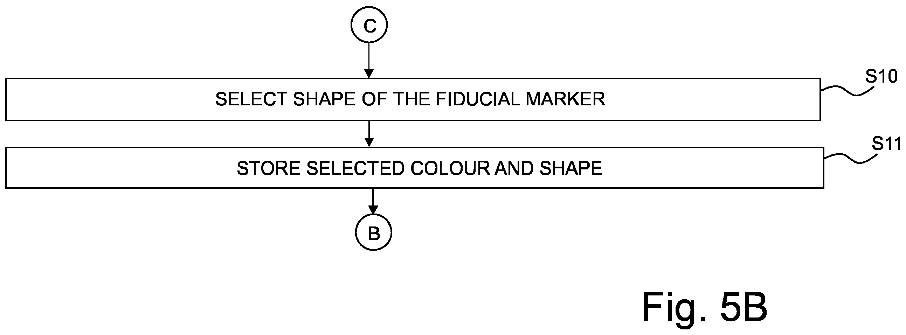

The method proceeds to an intermediate point C which connects Fig. 5A with Fig. 5B.

The intermediate point C in Fig. 5B leads to a tenth step S10.

In the tenth step S10 the print controller, based on the determined standard deviations, selects at least one shape of the fiducial marker to be printed on the substrate.

In an eleventh step S11 the print controller stores the at least one selected ink colour and the at least one selected shape in a print setting for the substrate in a media catalogue in storage of the print controller.

The method ends in an end point B.

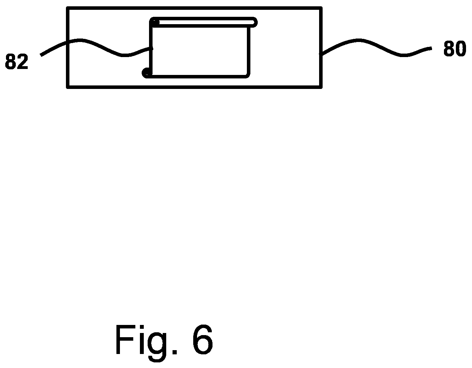

FIG. 6 schematically shows a non-transitory software medium 80 according to the invention. The software medium 80 comprises executable code 82 configured to, when executed, perform the method according to the invention, e.g. as described with respect to either the printing system 1 shown in Fig. 1 or the method of controlling the printing system 1 according to the present invention and/or according to any of the variants and modifications of the printing system 1 and/or of the method described herein.

The non-transitory software medium 80 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Although specific embodiments of the invention are illustrated and described herein, the invention is defined by the claims.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

## Claims

1. A method for determining fiducial markers to be printed on a substrate (16) by means of a printer (1) which is configured to execute a print process and to transport the substrate relatively to a gantry (9) comprising a print head and an image scanner (8) in a main scanning direction over a print surface underneath the gantry, the print head and the image scanner moveable along the gantry in a sub-scanning direction perpendicular to the main scanning direction, the printhead configured to eject marking material on the substrate and the image scanner configured to create scanned images of the printed substrate, and the printer comprising a print controller (31) for control of the print process and comprising a storage with print settings, the method comprising the steps of
a) transporting the substrate over the print surface underneath the gantry,
b) the image scanner moving along the gantry in at least one swath,
c) the image scanner creating at least one digital image of the substrate when the image scanner is moving along the gantry in the sub-scanning direction,
d) the image scanner sending the at least one created digital image to the print controller as a scanner response,
e) the print controller extracting a first patch from the at least one created digital image,
f) determining at least one contrast level of the first patch by means of the at least one created digital image,
g) based on the at least one determined contrast level, selecting at least one colour of marking material for printing a fiducial marker on the substrate,
h) extracting from the at least one created digital image a plurality of other patches, wherein each patch of the plurality of patches comprises a different part of the substrate, **characterized in**
i) determining for each patch of the plurality of patches a standard deviation of the scanner response within the patch,
j) based on the determined standard deviations, selecting at least one shape of the fiducial marker to be printed on the substrate, and
k) storing the at least one selected colour of the marking material and the at least one selected shape in a print setting for the substrate in a media catalogue in storage of the print controller.

2. Method according to claim 1, wherein the step g) of selecting the at least one colour of marking material comprises the sub-steps of
g1) retrieving from the storage a plurality of contrast thresholds for measured contrast levels,
g2) determining a mean contrast level from the at least one contrast level determined in step f),
g3) determining if the mean contrast level in step g2) is low or high compared to a first contrast threshold of the plurality of contrast thresholds,
g4) in case of a high mean contrast level, selecting a colour of marking material from a CMYK spectrum,
g5) in case of low mean contrast level
g5.1) in case of a mean contrast level higher than a second contrast threshold of the plurality of contrast thresholds which is lower than the first contrast threshold, selecting both white and a colour of the marking material from the CMYK spectrum, and
g5.2) in case of a mean contrast level which is lower than the second contrast threshold, selecting a colour white for the marking material.

3. Method according to claim 1 or 2, wherein the step j) of selecting the at least one shape comprises the sub-steps of
j1) retrieving from the storage a plurality of standard deviation thresholds for standard deviation levels,
j2) determining a mean or median standard deviation from the plurality of standard deviations determined in step i),
j3) determining if the determined mean of median standard deviation in step j2) is respectively low, high or very high compared to the plurality of thresholds for standard deviations, and
j4) based on the determined mean or median standard deviation, select at least one size for the at least one shape.

4. Method according to any of the preceding claims, wherein the first patch comprises an edge of the substrate, and the method comprises the step of determining the at least one contrast level between the substrate and the print surface by means of the first patch.

5. Method according to any one of the preceding claims, wherein the method comprises the step of receiving a print job to be printed on the substrate and printing the print job together with fiducial markers on the substrate, the fiducial markers having the at least one selected colour and the at least one selected shape on the substrate.

6. A printer (1) configured to execute a print process and to transport a subtrate (16) relatively to a gantry (9) comprising a print head and an image scanner (8) in a main scanning direction over a print surface underneath the gantry, the print head and the image scanner moveable along the gantry in a sub-scanning direction perpendicular to the main scanning direction, the printhead configured to eject marking material on the substrate and the image scanner configured to create scanned images of the printed substrate, and the printer comprising a print controller (31) for control of the print process and comprising a storage with print settings, wherein the print controller is configured to execute the steps of the method according to any one of the preceding claims.

7. A printer according to claim 6, wherein the printer is a roll-fed printer or a sheet-fed flatbed printer.

8. A software product comprising program code on a machine-readable medium, which program code, when loaded into a print controller of a digital printer according to claim 6 or 7, causes the print controller to execute the steps of a method according to any one of the claims 1 - 5.

## Patentansprüche

1. Verfahren zur Bestimmung von auf ein Substrat (16) zu druckenden Referenzmarken mittels eines Druckers (1), der so ausgelegt ist, dass er einen Druckvorgang ausführt und das Substrat relativ zu einem Portal (9), das einen Druckkopf und einen Bildscanner (8) umfasst, in einer Hauptabtastrichtung über eine unterhalb des Portals liegende Druckfläche transportiert, wobei der Druckkopf und der Bildscanner entlang des Portals in einer Nebenabtastrichtung senkrecht zur Hauptabtastrichtung bewegbar sind, der Druckkopf dazu ausgelegt ist, Markierungsmaterial auf das Substrat auszustoßen, und der Bildscanner dazu ausgelegt ist, gescannte Bilder des bedruckten Substrats zu erzeugen, und wobei der Drucker eine Drucksteuerung (31) zur Steuerung des Druckvorgangs sowie einen Speicher mit Druckeinstellungen umfasst, wobei das Verfahren die folgenden Schritte umfasst:
a) Transportieren des Substrats über die Druckfläche unterhalb des Portals,
b) der Bildscanner bewegt sich entlang des Portals in mindestens einem Durchgang,
c) der Bildscanner erzeugt mindestens ein digitales Bild des Substrats, während er sich entlang des Portals in der Nebenabtastrichtung bewegt,
d) der Bildscanner sendet das mindestens eine erzeugte digitale Bild als Scannerantwort an die Drucksteuerung,
e) die Drucksteuerung extrahiert einen ersten Farbfeld aus dem mindestens einen erzeugten digitalen Bild,
f) Bestimmen mindestens eines Kontrastwerts des ersten Farbfelds anhand des mindestens einen erzeugten digitalen Bilds,
g) auf der Grundlage des mindestens einen ermittelten Kontrastwerts Auswahl mindestens einer Farbe von Markierungsmaterial zum Drucken einer Passmarke auf das Substrat,
h) Extrahieren einer Vielzahl weiterer Farbfelder aus dem mindestens einen erzeugten digitalen Bild, wobei jedes Farbfeld der Vielzahl von Farbfeldern einen anderen Teil des Substrats umfasst, **dadurch gekennzeichnet, dass**
i) Bestimmung einer Standardabweichung der Scannerantwort innerhalb jedes Feldes der Vielzahl von Feldern,
j) auf der Grundlage der ermittelten Standardabweichungen Auswahl mindestens einer Form der auf das Substrat zu druckenden Passermarkierung, und
k) Speichern der mindestens einen ausgewählten Farbe des Markierungsmaterials und der mindestens einen ausgewählten Form in einer Druckeinstellung für das Substrat in einem Medienkatalog im Speicher der Drucksteuerung.

2. Verfahren nach Patentanspruch 1, wobei der Schritt g) der Auswahl der mindestens einen Farbe des Markierungsmaterials die Teilschritte umfasst:
g1) Abrufen einer Vielzahl von Kontrastschwellenwerten für gemessene Kontrastpegel aus dem Speicher,
g2) Ermitteln eines mittleren Kontrastwerts aus dem mindestens einen in Schritt f) ermittelten Kontrastwert,
g3) Feststellen, ob der in Schritt g2) ermittelte mittlere Kontrastwert im Vergleich zu einem ersten Kontrastschwellenwert aus der Vielzahl von Kontrastschwellenwerten niedrig oder hoch ist,
g4) im Falle eines hohen mittleren Kontrastwerts die Auswahl einer Farbe des Markierungsmaterials aus einem CMYK-Spektrum,
g5) im Falle eines niedrigen mittleren Kontrastwerts
g5.1) bei einem mittleren Kontrastwert, der höher ist als ein zweiter Kontrastschwellenwert aus der Vielzahl von Kontrastschwellenwerten, der niedriger ist als der erste Kontrastschwellenwert, sowohl Weiß als auch eine Farbe des Markierungsmaterials aus dem CMYK-Spektrum auswählen, und
g5.2) bei einem mittleren Kontrastniveau, das niedriger ist als der zweite Kontrastschwellenwert, Auswahl der Farbe Weiß für das Markierungsmaterial.

3. Verfahren nach Patentanspruch 1 oder 2, wobei der Schritt j) der Auswahl der mindestens einen Form die Teilschritte umfasst:
j1) Abrufen einer Vielzahl von Standardabweichungsschwellenwerten für Standardabweichungswerte aus dem Speicher,
j2) Ermitteln eines Mittelwerts oder Medians der Standardabweichung aus der Vielzahl der in Schritt i) ermittelten Standardabweichungen,
j3) die Feststellung, ob der in Schritt j2) ermittelte Mittelwert bzw. Median der Standardabweichung im Vergleich zu den mehreren Schwellenwerten für Standardabweichungen niedrig, hoch oder sehr hoch ist, und
j4) auf der Grundlage der ermittelten mittleren oder medianen Standardabweichung Auswahl mindestens einer Größe für die mindestens eine Form.

4. Verfahren nach einem der vorstehenden Patentansprüche, wobei der erste Testfleck eine Kante des Substrats umfasst und das Verfahren den Schritt des Bestimmens des mindestens einen Kontrastniveaus zwischen dem Substrat und der Druckoberfläche mittels des ersten Testflecks umfasst.

5. Verfahren nach einem der vorstehenden Patentansprüche, wobei das Verfahren den Schritt des Empfangens eines auf das Substrat zu druckenden Druckauftrags und des Druckens des Druckauftrags zusammen mit Passmarken auf das Substrat umfasst, wobei die Passmarken die mindestens eine ausgewählte Farbe und die mindestens eine ausgewählte Form auf dem Substrat aufweisen.

6. Ein Drucker (1), der dazu ausgelegt ist, einen Druckvorgang auszuführen und ein Substrat (16) relativ zu einem Portal (9) zu transportieren, das einen Druckkopf und einen Bildscanner (8) umfasst, und zwar in einer Hauptabtastrichtung über eine Druckfläche unterhalb des Portals, wobei der Druckkopf und der Bildscanner entlang des Portals in einer Nebenabtastrichtung senkrecht zur Hauptabtastrichtung bewegbar sind, wobei der Druckkopf dazu ausgelegt ist, Markierungsmaterial auf das Substrat auszustoßen, und der Bildscanner dazu ausgelegt ist, gescannte Bilder des bedruckten Substrats zu erzeugen, und wobei der Drucker eine Drucksteuerung (31) zur Steuerung des Druckvorgangs sowie einen Speicher mit Druckeinstellungen umfasst, wobei die Drucksteuerung dazu ausgelegt ist, die Schritte des Verfahrens gemäß einem der vorstehenden Patentansprüche auszuführen.

7. Drucker nach Patentanspruch 6, wobei der Drucker ein Rollendrucker oder ein Flachbettdrucker mit Einzelblattzuführung ist.

8. Ein Softwareprodukt, das Programmcode auf einem maschinenlesbaren Medium umfasst, wobei dieser Programmcode, wenn er in eine Drucksteuerung eines Digitaldruckers gemäß Patentanspruch 6 oder 7 geladen wird, bewirkt, dass die Drucksteuerung die Schritte eines Verfahrens gemäß einem der Patentansprüche 1 bis 5 ausführt.

## Revendications

1. Procédé de détermination de repères de référence à imprimer sur un substrat (16) au moyen d'une imprimante (1) configurée pour exécuter un processus d'impression et pour transporter le substrat par rapport à un portique (9) comprenant une tête d'impression et un scanner d'images (8) dans une direction de balayage principale sur une surface d'impression située sous le portique, la tête d'impression et le scanner d'images pouvant se déplacer le long du portique dans une direction de balayage secondaire perpendiculaire à la direction de balayage principale, la tête d'impression étant configurée pour éjecter un matériau de marquage sur le substrat et le scanner d'images étant configuré pour créer des images numérisées du substrat imprimé, et l'imprimante comprenant un contrôleur d'impression (31) destiné à contrôler le processus d'impression et comprenant une mémoire contenant des paramètres d'impression, le procédé comprenant les étapes suivantes :
a) le transport du substrat sur la surface d'impression située sous le portique,
b) le scanner d'images se déplaçant le long du portique selon au moins une bande,
c) le scanner d'images créant au moins une image numérique du substrat lorsque le scanner d'images se déplace le long du portique dans la direction de balayage secondaire,
d) le scanner d'images envoie la ou les images numériques créées au contrôleur d'impression en tant que réponse du scanner,
e) le contrôleur d'impression extrait une première zone de l'au moins une image numérique créée,
f) la détermination d'au moins un niveau de contraste de la première zone à l'aide de ladite au moins une image numérique créée,
g) sur la base dudit au moins un niveau de contraste déterminé, sélectionner au moins une couleur de matériau de marquage pour imprimer un repère de référence sur le substrat,
h) l'extraction, à partir de ladite au moins une image numérique créée, d'une pluralité d'autres zones, chaque zone de ladite pluralité de zones comprenant une partie différente du substrat, **caractérisé en ce que**
i) la détermination, pour chaque patch de la pluralité de patches, d'un écart-type de la réponse du scanner au sein du patch,
j) sur la base des écarts-types déterminés, sélectionner au moins une forme du repère de référence à imprimer sur le substrat, et
k) le stockage de la au moins une couleur sélectionnée du matériau de marquage et de la au moins une forme sélectionnée dans un paramètre d'impression pour le substrat, dans un catalogue de supports stocké dans la mémoire du contrôleur d'impression.

2. Procédé selon la revendication 1, dans lequel l'étape g) consistant à sélectionner la au moins une couleur du matériau de marquage comprend les sous-étapes suivantes :
g1) récupérer dans la mémoire une pluralité de seuils de contraste pour des niveaux de contraste mesurés,
g2) déterminer un niveau de contraste moyen à partir du au moins un niveau de contraste déterminé à l'étape f),
g3) déterminer si le niveau de contraste moyen de l'étape g2) est faible ou élevé par rapport à un premier seuil de contraste parmi la pluralité de seuils de contraste,
g4) dans le cas d'un niveau de contraste moyen élevé, sélectionner une couleur de matériau de marquage à partir d'un spectre CMJN,
g5) en cas de niveau de contraste moyen faible
g5.1) dans le cas d'un niveau de contraste moyen supérieur à un deuxième seuil de contraste parmi la pluralité de seuils de contraste, lequel est inférieur au premier seuil de contraste, sélectionner à la fois le blanc et une couleur du matériau de marquage à partir du spectre CMJN, et
g5.2) dans le cas d'un niveau de contraste moyen inférieur au deuxième seuil de contraste, sélectionner la couleur blanche pour le matériau de marquage.

3. Procédé selon la revendication 1 ou 2, dans lequel l'étape j) consistant à sélectionner la au moins une forme comprend les sous-étapes suivantes :
j1) récupérer dans la mémoire une pluralité de seuils d'écart-type pour des niveaux d'écart-type,
j2) déterminer un écart-type moyen ou médian à partir de la pluralité d'écarts-types déterminés à l'étape i),
j3) déterminer si l'écart-type moyen ou médian déterminé à l'étape j2) est respectivement faible, élevé ou très élevé par rapport à la pluralité de seuils d'écart-type, et
j4) sur la base de l'écart-type moyen ou médian déterminé, sélectionner au moins une taille pour ladite au moins une forme.

4. Procédé selon l'une quelconque des revendications précédentes, dans lequel la première zone comprend un bord du substrat, et le procédé comprend l'étape consistant à déterminer le au moins un niveau de contraste entre le substrat et la surface d'impression au moyen de la première zone.

5. Procédé selon l'une quelconque des revendications précédentes, dans lequel le procédé comprend l'étape consistant à recevoir un travail d'impression à imprimer sur le substrat et à imprimer le travail d'impression conjointement avec des repères de positionnement sur le substrat, les repères de positionnement présentant la au moins une couleur sélectionnée et la au moins une forme sélectionnée sur le substrat.

6. Imprimante (1) configurée pour exécuter un processus d'impression et pour transporter un substrat (16) par rapport à un portique (9) comprenant une tête d'impression et un scanner d'images (8) dans une direction de balayage principale sur une surface d'impression située sous le portique, la tête d'impression et le scanner d'images étant mobiles le long du portique dans une direction de balayage secondaire perpendiculaire à la direction de balayage principale, la tête d'impression étant configurée pour éjecter un matériau de marquage sur le substrat et le scanner d'images étant configuré pour créer des images numérisées du substrat imprimé, et l'imprimante comprenant un contrôleur d'impression (31) destiné à contrôler le processus d'impression et comprenant une mémoire contenant des paramètres d'impression, dans laquelle le contrôleur d'impression est configuré pour exécuter les étapes du procédé selon l'une quelconque des revendications précédentes.

7. Imprimante selon la revendication 6, dans laquelle l'imprimante est une imprimante à alimentation par rouleau ou une imprimante à plat à alimentation par feuilles.

8. Produit logiciel comprenant un code de programme sur un support lisible par machine, lequel code de programme, lorsqu'il est chargé dans un contrôleur d'impression d'une imprimante numérique selon la revendication 6 ou 7, amène le contrôleur d'impression à exécuter les étapes d'un procédé selon l'une quelconque des revendications 1 à 5.
